## Europäisches Patentamt

(19) **European Patent Office**

**Office européen des brevets**

(11) Numéro de publication: **0 072 270**
**B1**

(12) # FASCICULE DE BREVET EUROPEEN

(45) Date de publication du fascicule du brevet:
**02.04.86**

(51) Int. Cl.⁴: **G 01 D 9/16,** G 06 F 15/20, G 01 R 13/06

(21) Numéro de dépôt: **82401275.1**

(22) Date de dépôt: **06.07.82**

(54) **Système enregistreur de perturbations.**

(30) Priorité: **17.07.81 FR 8113977**

(43) Date de publication de la demande:
**16.02.83 Bulletin 83/7**

(45) Mention de la délivrance du brevet:
**02.04.86 Bulletin 86/14**

(84) Etats contractants désignés:
**BE CH DE FR GB IT LI**

(56) Documents cités:
**FR - A - 2 429 998**
**FR - A - 2 454 626**
**US - A - 4 161 782**

**Le dossier contient des informations techniques présentées postérieurement au dépôt de la demande et ne figurant pas dans le présent fascicule.**

(73) Titulaire: **THOMSON-CSF, 173, Boulevard Haussmann, F-75379 Paris Cedex 08 (FR)**

(72) Inventeur: **Bouhelier, Francis, THOMSON-CSF SCPI 173, bld Haussmann, F-75379 Paris Cedex 08 (FR)**
Inventeur: **Vialatte, Claude, THOMSON-CSF SCPI 173, bld Haussmann, F-75379 Paris Cedex 08 (FR)**

(74) Mandataire: **Trocellier, Roger et al, THOMSON-CSF SCPI 19, avenue de Messine, F-75008 Paris (FR)**

ACTORUM AG

## Description

La présente invention concerne des systèmes enregistreurs de perturbations encore appelés perturbographes ou enregistreurs de signaux aléatoires. Ces dispositifs présentent deux modes de fonctionnement caractéristiques, un mode de veille pendant lequel seule une surveillance des signaux électriques d'entrée est effectuée, et un mode d'enregistrement pendant lequel les signaux électriques d'entrée sont effectivement enregistrés. Le début de l'enregistrement se situe généralement quelques dixièmes de seconde avant l'apparition de la perturbation, pour permettre ultérieurement d'en connaître complètement l'historique.

Il existe deux types principaux de perturbographe, les enregistreurs électromécaniques et électroniques. L'invention est relative à une solution électronique.

Selon un premier mode de réalisation connu entrant dans cette catégorie, un dispositif électronique produisant un retard est inséré en amont du dispositif d'écriture sur papier, lequel utilise des galvanomètres optiques, une lampe halogène et un papier photosensible. Pour cela, les signaux électroniques d'entrée, après avoir subi une conversion analogique/numérique, traversent le dispositif de retard, ou mémoire de pré-déclenchement, constitué à l'aide d'un registre à décalage, et sont reconvertis ensuite en signaux analogiques pour être appliqués aux galvanomètres. Cette solution présente divers inconvénients dus essentiellement aux dispositifs d'écriture utilisés. Les galvanomètres à lampes halogènes sont d'un coût élevé et le fait qu'ils soient constamment alimentés nuit à leur fiabilité. De plus, la nécessité de venir périodiquement remplacer le rouleau de papier utilisé conduit à un coût d'exploitation élevé. Enfin, le papier photosensible du dispositif d'écriture présente une mauvaise durée de vie en stockage, avant et après utilisation.

Selon une deuxième solution connue, certains de ces inconvénients sont évités en utilisant un dispositif d'écriture conventionnel à stylets, donc de coût réduit, dont le papier présente une bonne durée de vie. L'enregistreur à stylets présente toutefois une bande passante réduite, de l'ordre de 30 hertz au plus, et pour reproduire des signaux de fréquence supérieure il est prévu un dispositif de ralentissement des signaux pour les rendre compatibles avec l'enregistreur à stylets. Ce dispositif est constitué par une mémoire électronique état solide, qui est insérée entre le registre à décalage, c'est-à-dire la mémoire de pré-déclenchement, et des circuits de reconversion numérique/analogique. Un inconvénient du dispositif d'écriture à stylets, est la difficulté à reproduire de manière simple, en même temps que les signaux d'entrée, l'information de date qui est nécessaire pour l'exploitation des enregistrements.

Les deux solutions considérées présentent en outre deux défauts importants. Le premier est la nécessité de remplacement systématique du rouleau de papier. Le second défaut est le manque de souplesse du support de l'information, un diagramme sur papier se prêtant difficilement à une analyse et à une exploitation numérique automatiques n'utilisant pas l'opérateur humain.

Une troisième solution qui évite les inconvénients précités est décrite dans la demande de brevet FR-A-2 429 998. Les signaux d'entrée utiles sont enregistrés sur une mémoire magnétique à disque souple insérée entre le registre à décalage constituant la mémoire dite de pré-déclenchement et les circuits de conversion numérique/ analogique précédant un enregistreur sur papier. La capacité de la mémoire à disque est équivalente à plusieurs rouleaux de papier. La taille de cette mémoire permet donc de réduire considérablement la fréquence de relevé des rouleaux de papier. Si le dispositif d'écriture est réalisé sous forme amovible, l'opérateur peut le transporter avec lui et reproduire sur le papier les enregistrements de jour de sa visite.

Les inconvénients de cette dernière solution électronique résident principalement dans le type de mémoire utilisé, mémoire qui fait partie intégrante de la chaîne d'enregistrement. Pour certaines applications, comme la surveillance des lignes de transport d'énergie électrique dans les pays à climat tropical, les caractéristiques des disques souples (gamme de température d'utilisation de 5 à 45°C, humidité relative tolérable allant de 20 à 80%) peuvent s'avérer insuffisantes. De plus, une panne de la mémoire à disque souple entraîne automatiquement une panne de l'enregistreur qui n'est dès lors plus apte à recueillir de nouvelles informations.

Il est connu de plus, par le brevet US-A-4 161 782, un dispositif enregistreur à microprocesseur destiné à effectuer des mesures de paramètres physiques de température, de pression et de temps, dans le domaine des forages pétroliers. Cette solution permet une réduction de la taille des mémoires et de la consommation électrique de l'enregistreur et des capteurs, ce qui présente un intérêt pour l'autonomie de l'ensemble. A cet effet, une unité centrale contient en mémoire morte programmable des algorithmes de correction et un programme de commande d'une alimentation multiplexée des différents capteurs externes à partir de la batterie interne, via un interface de commande, et le calcul d'une fréquence d'échantillonnage variable en fonction de la vitesse d'évolution des paramètres détectés. La scrutation et l'enregistrement s'effectuent ainsi en permanence, à fréquence variable pour économiser la batterie.

Un but de la présente invention est de réaliser un système enregistreur de perturbations qui élimine les inconvénients des solutions précédentes, tout en offrant les avantages de chacune d'elles; en particulier, le système utilise une mémoire tampon de capacité assez élevée qui peut travailler en combinaison avec un dispositif d'écriture économique, autorisant des inscriptions tant alpha-numériques (datation et identification) que graphiques, sur un papier stable avant et après utilisation.

En outre le système apporte, comme on pourra s'en rendre compte dans la description ultérieure, des avantages spécifiques dont les principaux sont: programmabilité des caractéristiques, transmission aisée à distance des informations et compatibilité avec des moyens automatiques d'analyse et d'exploitation numérique, flexibilité poussée permettant des combinaisons avec des modules périphériques performants, grande fiabilité dûe à l'utilisation des composants statiques et de faible consommation électrique en période de veille.

A cet effet, l'invention a pour objet un système enregistreur de perturbations, tel que défini dans la revendication 1.

Les particularités de la présente invention apparaîtront dans la description qui suit, donnée à titre d'exemple non limitatif à l'aide des figures annexées qui représentent:

– la figure 1, un diagramme synoptique d'un système enregistreur de perturbations conforme à la présente invention;
– les figures 2 à 5, des diagrammes relatifs à différents modes de réalisation modulaire d'un système enregistreur de perturbations selon l'invention; et
– la figure 6, un organigramme d'un système selon l'invention.

Un système enregistreur de perturbations conforme à l'invention combine plusieurs ensembles ou modules qui peuvent être divisés en:

– une première partie installée à poste fixe sur un lieu d'enregistrement. Cette partie fixe constitue un module de base ou enregistreur de perturbations EP donc la fonction est de surveiller les signaux électriques d'entrée et enregistrer les perturbations éventuelles dans une mémoire état solide formant mémoire tampon;
– une seconde partie qui peut être installée à proximité de l'enregistreur EP, ou bien à distance de celui-ci; cette dernière formule peut notamment répondre à un traitement centralisé de plusieurs enregistreurs de perturbations EP. Cette seconde partie référencée EX peut être réalisée de diverses manières et est constituée essentiellement par des moyens d'exploitation des données enregistrées dans le module EP. La partie exploitation EX peut être réalisée à l'aide d'une imprimante IP sur papier, ou comporter une unité mémoire UM comme on verra dans ce qui suit.

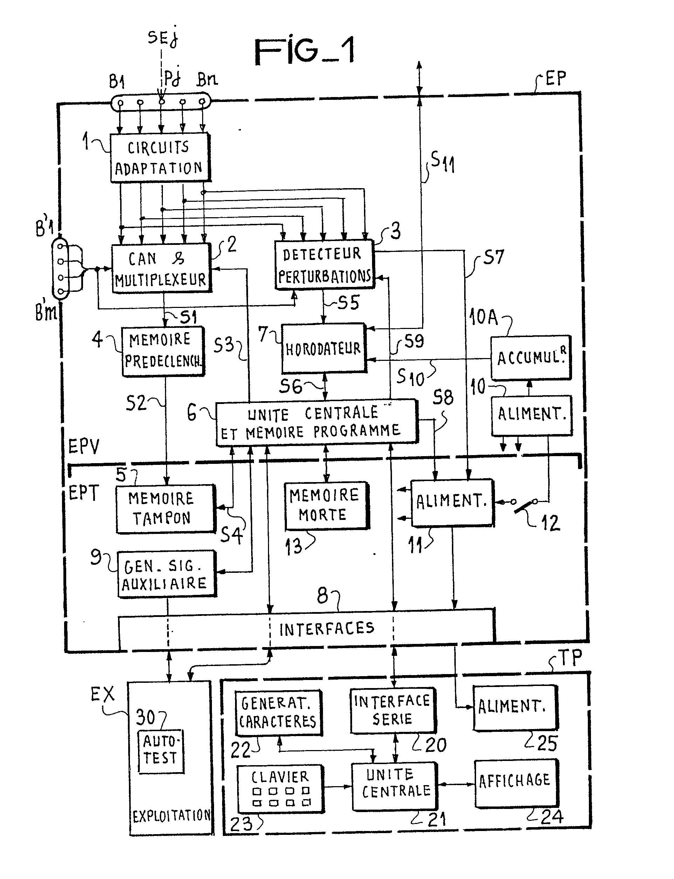

En se reportant à la figure 1, le système enregistreur de perturbations est représenté par ses composants essentiels, l'enregistreur proprement dit EP, les circuits d'exploitation EX et un terminal de programmation TP. La réalisation originale de l'enregistreur EP permet notamment d'assurer une grande flexibilité au système.

L'enregistreur EP comporte des moyens de raccordement pour la réception de signaux d'entrée à surveiller. Le raccordement s'effectue sur des bornes BI à Bn susceptibles de recevoir jusqu'à n signaux d'entrée SEl à SEn. Les bornes d'arrivée sont connectées à un ensemble de circuits d'adaptation lesquels sont branchés sur les voies pour lesquelles une adaptation est prévue (adaptation de niveau, de bande passante, ...).

Les signaux sortant du bloc 1 sont ensuite transmis d'une part à des circuits 2 de conversion analogique/numérique et de multiplexage et d'autre part, à des circuits 3 de détection de perturbations encore appelés circuits de déclenchement.

La conversion en numérique des signaux reçus sous forme analogique peut être effectuée avant multiplexage ou après, dans ce dernier cas un seul circuit de conversion suffit, mais dans la première option la fiabilité du système est meilleure. Il est entendu que le système peut recevoir également des signaux sous forme numérique qui sont alors transmis directement aux circuits de multiplexage en 2 ainsi qu'aux circuits de détection en 3. Les signaux numériques sont reçus sur les bornes indiquées B'1 à B'm.

Les circuits de détection 3 procèdent pour les signaux analogiques par des comparaisons à seuil, par filtrage ou autre technique, pour détecter des perturbations spécifiques, s'agissant de variation d'amplitude, ou de variation de fréquence ou d'un autre paramètre caractéristique du signal d'entrée correspondant. Dans le cas de signaux numériques, la détection de perturbations est basée sur la détection du changement d'étai d'une ou plusieurs entrées.

La sortie de multiplexage S1 est transmise à une mémoire 4 de pré-déclenchement, du type registre à décalage pour introduire un retard déterminé permettant, lors de la détection d'une perturbation par le circuit 3, d'enregistrer dans un circuit en aval la situation préalable à la perturbation pendant une durée délimitée équivalant sensiblement à ce retard, de l'ordre de quelques dizièmes de seconde par exemple.

La mémoire 4 est connectée par sa sortie S2 à une seconde mémoire 5 destinée à enregistrer les perturbations.

Un circuit 6 élabore les signaux de commande et de synchronisation S3 relatifs aux circuits de conversion et de multiplexage 2. Il commande par la liaison S4 l'enregistrement des perturbations; à cet effet une sortie S5 du circuit détecteur 3 est transmise au circuit 6 à travers un dispositif horodateur 7.

Le dispositif horodateur 7 est destiné à fournir une datation très précise, par exemple au 1 millième de seconde, de chaque perturbation. Cette information, ainsi que la date, est transmise par la liaison S6 au circuit 6 pour être enregistrée dans la deuxième mémoire 5 en tête de chaque enregistrement sous forme d'un identificateur contenant en numérique tous les renseignements pour l'exploitation ultérieure des informations, caractéristiques du lieu et de l'appareil où a été effectué l'enregistrement, date et durée de celui-ci.

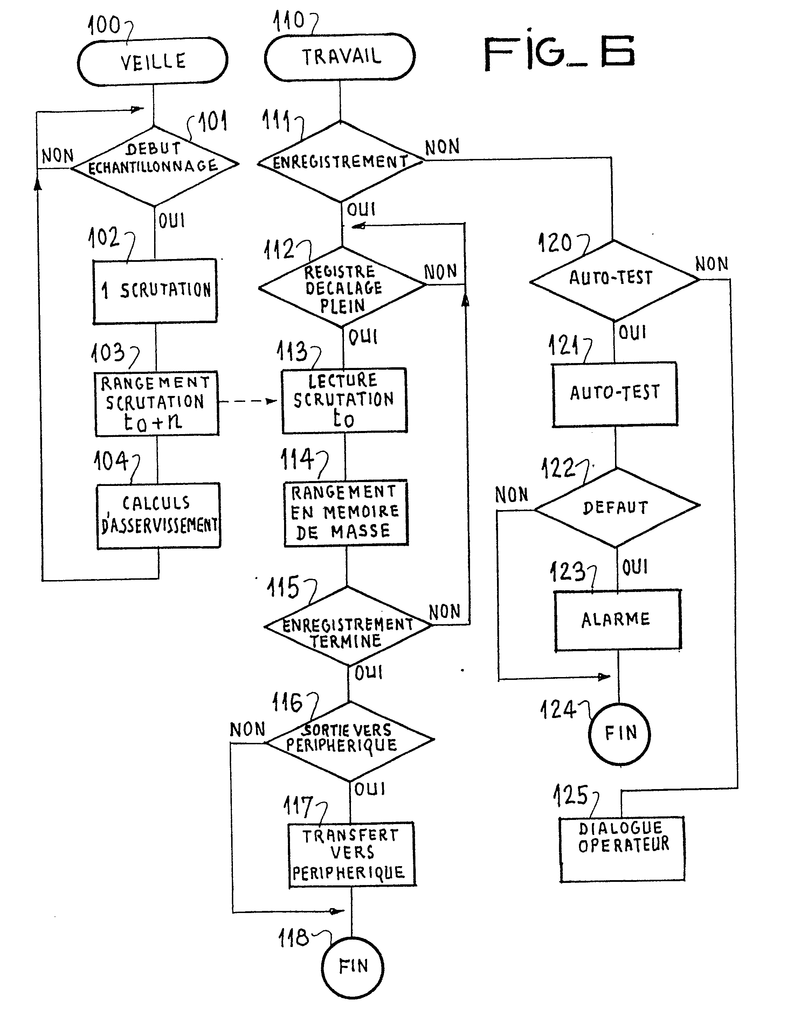

Le dispostif horodateur 7 utilise des circuits à faible consommation électrique, de technologie CMOS par exemple. Un accumulateur 10A maintenu en charge permanente par l'alimentation 10, sert d'alimentation de secours à l'horodateur 7 par la liaison S10 en cas de coupure temporaire de l'alimentation générale 10. La liaison S11 relie le dispositif horodateur à l'extérieur, pour lui permettre de recevoir ou d'emettre des signaux de synchronisation. Ceux-ci peuvent provenir d'une horloge extérieure HX (figure 3) ou d'un autre enregistreur EP (figure 5) et être dirigés vers un ou plusieurs autres enregistreurs EP.

Le circuit 6 comporte une unité centrale et des circuits connexes 2 pour former un ensemble microprocesseur ou microordinateur; il est donc pourvu également de mémoires de programme et d'entrée de variables, de mémoires de données constantes et de liaisons par bus avec des circuits entrée/sortie. Sa structure est conventionnelle et on pourra se reporter par exemple à la documentation éditée par la société MOTOROLA intitulée «M6800 Microcomputer System Design Data».

L'unité centrale 6 commande l'écriture dans la mémoire 5 et ultérieurement la lecture de cette mémoire pour transmettre les données vers les moyens d'exploitation à travers des circuits d'interface 8.

Ainsi une première particularité du système résulte de ce que les liaisons extérieures de l'enregistreur EP s'effectuent par des circuits d'interface numériques; il n'y a pas de reconversion numérique/analogique en sortie de la seconde mémoire. La communication de l'enregistreur EP avec les moyens d'exploitation EX peut s'effectuer sous forme d'une liaison numérique standard, de type RS232 par exemple. Cette disposition qui économise un multiplexage et une reconversion numérique/analogique à en plus l'avantage de banaliser les signaux de sortie permettant ainsi de connecter à l'enregistreur EP de nombreux périphériques du type informatique notamment.

L'enregistreur de perturbations EP comporte en outre, de manière conventionnelle, des circuits 9 dits auxiliaires pour élaborer des signaux de service, signalant par exemple par la fermeture d'un contact de relais que l'enregistrement est en cours ou encore, pour commander la mise sous tension du périphérique destiné à recevoir les données. Ces signaux de service sont transmis à l'extérieur également sous forme numérique à travers les circuits d'interface 8.

Une seconde particularité de l'enregistreur est que la mémoire 5 est une mémoire statique au lieu d'être une mémoire à disque ou à bande. La mémoire 5 est à semiconducteurs et présente une capacité qui peut être moyenne, de l'ordre d'une dizaine de secondes d'enregistrement par exemple. Elle constitue en fait une mémoire tampon entre l'enregistreur et les organes extérieurs EX d'analyse et d'exploitation.

Suivant une troisième particularité du système, l'enregistreur EP est décomposé en deux parties, une partie veille EPV constamment alimentée, et une partie travail EPT qui n'est alimentée qu'en mode enregistrement. En toute rigueur, la partie EPT est alimentée également lorsque l'enregistreur EP est utilisé avec le terminal de programmation TP comme décrit ultérieurement. Ceci est produit grâce à des alimentations séparées pour l'une et l'autre de ces parties, l'alimentation 10 concerne la partie veille et met sous tension les circuits entrant dans cette partie dès la mise en marche de l'enregistreur. La seconde alimentation 11 relative à la partie travail EPT n'est déclenchée que par la sortie S7 du détecteur 3 lors de la détection d'une perturbation pour mettre sous tension les circuits de la partie travail; après enregistrement correspondant dans la mémoire 5 l'unité centrale par la liaison S8 commande l'arrêt de l'alimentation de la partie travail par le circuit 11. Une commande manuelle 12 permet toutefois la mise sous tension de la partie travail EPT par l'opérateur lors de l'utilisation du terminal de programmation TP. La partie travail EPT comporte la seconde mémoire ou mémoire tampon 5, les circuits auxiliaires 9, les circuits d'interface 8 ainsi qu'une mémoire morte 13 programmée et qui est utilisée par le biais de l'unité centrale 6 lors du dialogue avec l'enregistreur EP au moyen du terminal de programmation TP. A noter que l'unité centrale 6 peut également faire partie de la partie travail EPT moyennant l'utilisation d'une seconde unité centrale dans la partie veille qui assurera les liaisons de commande S3 vers les circuits de conversion et de multiplexage 2 et S9 vers les circuits détecteur 3; cette liaison S9 permet à l'unité centrale 6 de venir interroger le circuit 3 pour connaître l'origine du déclenchement et pouvoir placer ensuite cette information dans l'identificateur en tête de l'enregistrement.

Dans le cas de l'utilisation d'une deuxième unité centrale ou d'un petit microprocesseur, cette seconde unité est évidement reliée avec l'unité centrale disposée dans la partie travail.

Moyennant la décomposition de l'enregistreur EP en deux parties distinctes, entièrement statiques, dont seule la partie veille est constamment sous tension, la puissance absorbée en moyenne est ainsi très réduite et la fiabilité élevée. A titre indicatif, la puissance peut être inférieure à 20 watts.

Une quatrième particularité du système est la possibilité de programmer certaines de ses caractéristiques telles que la bande passante, la sensibilité, la durée des enregistrements, les identifications de service, ce qui permet à l'utilisateur de faire évoluer les enregistrements selon ses propres besoins. Ceci résulte de l'utilisation d'un terminal de programmation TP de type conventionnel constitué par un terminal portatif de la taille d'une calculatrice de poche, donc facilement transportable. Le terminal TP comporte, de même que l'enregistreur EP, une unité centrale 21 dont les programmes peuvent évoluer. Il est connecté sur des liaisons d'interface numériques en 8 et permet de produire l'ensemble des commandes et de la programmation, et d'assurer un dialogue entre l'opérateur et l'enregistreur EP grâce à l'affichage alphanumérique sur le terminal TP. Il résulte de cet aménagement que l'enregistreur de perturbations EP peut être conçu avec un boîtier pratiquement dépourvu de commandes manuelles sur la face avant, ce qui permet de minimiser le coût. Le dialogue et la programmation par le biais du terminal TP sont rendus possibles grâce à l'unité centrale 6 qui peut convertir dans la mémoire morte 13 programmée à cet effet, le dialogue du type informatique en dialogue facilement interprêtable par un opérateur non spécialisé. La mémoire morte 13 constitue l'équivalent d'un dictionnaire et peut être changée quand la langue de l'opérateur change. Il a été rappelé à titre indicatif les composants essentiels du terminal de programmation TP qui sont un interface série 20, l'unité centrale 21, un générateur de caractères 22, le clavier 23 et un affichage 24, et en outre une alimentation 25. L'alimentation 25 est commandée à partir de l'alimentation 11 laquelle est mise en marche par fermeture du contacteur 12; ce dernier contacteur peut d'ailleurs être mis sur la position fermée par l'enclenchement mécanique de la prise de raccordement du terminal de programmation.

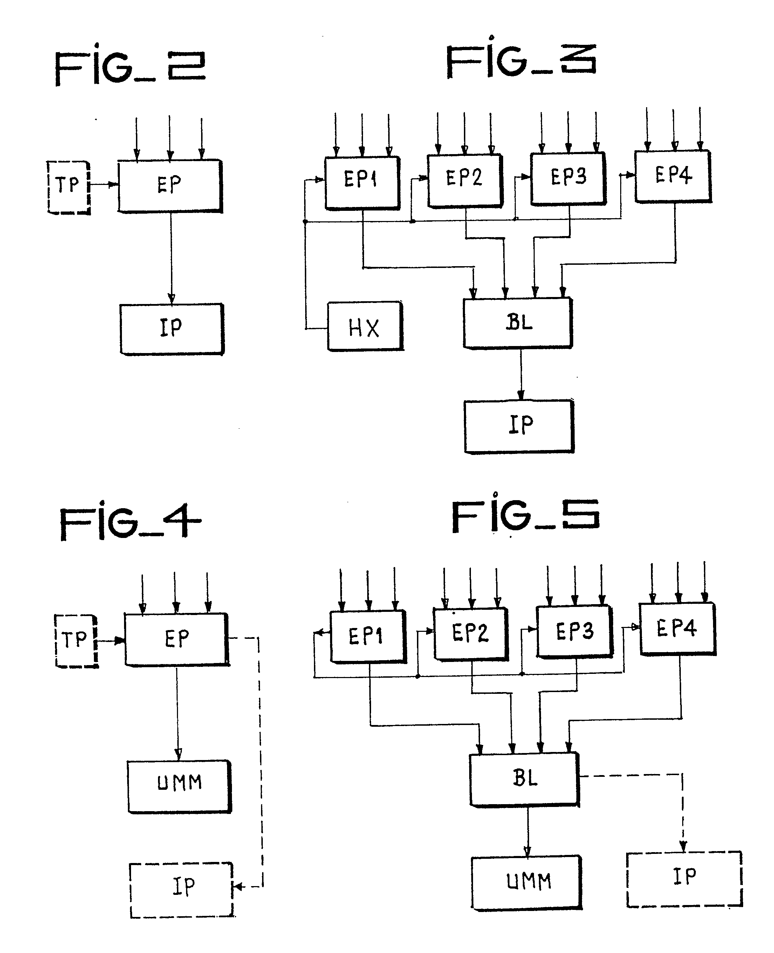

L'enregistreur de perturbation EP peut être combiné avec une imprimante IP constituant les circuits d'exploitation EX, de manière à reproduire sur papier les éléments stockés dans la mémoire tampon 5. L'imprimante IP comme représenté sur la figure 2 peut être une imprimante quelconque, dans la mesure où elle peut fonctionner aussi bien en mode graphique pour le tracé des courbes qu'en mode alphanumérique pour l'inscription des données de date et autres, et dans la mesure où elle peut être mise en route à distance (c'est-à-dire mise sous tension par commande de l'enregistreur EP). Ainsi, une imprimante thermique, ou de type électro-sensible ou à tube cathodique à fibres optiques, ou à laser, convient parfaitement et l'utilisateur peut choisir en fonction de ses besoins. Le montage ne présente pas l'inconvénient de la perte de surveillance en cas de fin de papier ou panne de l'imprimante. En effet, la mémoire 5 a une capacité généralement suffisante pour pouvoir attendre l'arrivée de l'opérateur tout en étant près à stocker d'autres enregistrements éventuels. Le terminal de programmation TP est représenté en pointillé car il est normalement transporté par l'opérateur et n'intervient pas dans le fonctionnement normal de l'enregistreur.

Sur la figure 3 on a représenté une variante de la combinaison précédente suivant laquelle plusieurs enregistreurs de perturbations EP1, EP2, . . . sont combinés avec une seule imprimante IP par le biais d'un boîtier de liaison BL qui fait office de circuit multiplexeur, en sorte de dialoguer successivement avec les différents enregistreurs EP1, EP2, . . . reliés par leurs entrée/sortie de synchronisation à une horloge HX extérieure.

Les réalisations selon les figures 2 ou 3 impliquent le déplacement d'un opérateur pour le remplacement du rouleau de papier. Pour remédier à cette obligation qui peut être un inconvénient lorsque les déplacements sont difficiles, l'enregistreur EP selon la figure 4, ou les enregistreurs EP1, EP2, . . . selon la figure 5, sont reliés (à travers un circuit de liaison BL dans la dernière option) à une mémoire magnétique dont la capacité peut être très élevée par exemple de plusieurs milliers de secondes. Ceci revient à introduire une troisième mémoire sur la chaîne des données, l'unité UMM dont la capacité est bien plus élevée que celle de la mémoire tampon 5. L'utilisateur est a même de choisir l'unité de mémoire magnétique la mieux adaptée pour ces besoins, en fonction de la capacité recherchée et des conditions d'environnement. Il va de soi que cette option convient particulièrement bien à des concepts de liaison à distance lorsque la gestion d'un ou, généralement, de plusieurs enregistreurs de perturbations est centralisée. Dans ce cas, il est nécessaire d'associer à l'enregistreur EP un élément d'interface supplémentaire adapté au type de liaison à distance (lignes téléphoniques, lignes haute tension, fibres optiques, faisceaux hertziens . . .); cet élément est par exemple un modulateur-démodulateur dans le cas d'une liaison téléphonique. Les unités mémoires UMM peuvent être à disque souple, ou à bande magnétique, ces deux supports étant amovibles, ou encore des unités de mémoire à disque fixe, ou à bulles magnétiques, ou d'autres types. Dans chacun des cas l'opérateur peut programmer l'enregistreur EP pour que celui-ci efface, dans l'unité de mémoire magnétique UMM lorsque le support mémoire est plein, les enregistrements les plus anciens, pour y placer les plus récents.

Sur les montages figure 4 ou figure 5 qui utilisent une unité de mémoire magnétique UMM, on a indiqué en pointillé une imprimante IP sur laquelle peut être reproduit l'enregistrement lorsque l'opérateur le désire. L'imprimante IP peut être apportée sur le site par l'opérateur en même temps que le terminal TP. Grâce à l'unité centrale 6 de l'enregistreur EP ou de l'un d'eux (cas de la figure 5), l'opérateur effectue un transfert des informations de l'unité de mémoire magnétique UMM vers l'imprimante IP.

Dans les montages décrits comportant un ou plusieurs enregistreurs EP, il y a lieu de noter que les décisions sont centralisées par l'enregistreur et non par le ou les périphériques associés. Une perturbation étant par définition aléatoire, elle peut intervenir au cours d'un dialogue ou une transmission de données. L'unité centrale 6 est programmée en sorte que la fonction enregistrement à une priorité absolue et l'unité centrale interrompt la liaison de l'enregistreur avec son périphérique lorsque cela est nécessaire.

A noter également qu'un test de bon fonctionnement peut être demandé par l'unité centrale 6 de l'enregistreur EP aux éléments périphériques avant ou après chaque utilisation, ou de manière périodique, pour contrôler que l'ensemble est prêt à fonctionner loin de la prochaine perturbation. Ce test est reçu par l'enregistreur sous forme d'un mot d'état numérique, est analysé par l'unité centrale 6 et peut conduire à l'appel de l'opérateur lorsqu'un défaut est décélé. Cet appel s'effectue par l'intermédiaire des circuits auxiliaires 9. L'opérateur a alors accès au mot d'état caractéristique de la panne est utilisant le terminal de programmation TP. On a représenté à titre indicatif des circuits d'autotest 30 dans la partie exploitation de la figure 1, ces circuits étant destinés à fournir le mot d'état numérique correspondant au test de bon fonctionnement sur interrogation de l'unité centrale 6. Les circuits 30 peuvent être conçus de manière connue, on pourra se reporter notamment au document «Preliminary OEM Manuel for a Floppy disk controller, published by Scientific Micro Systems, 777 East Middlefield Road, Mountain View Calif. 94043 – published December 9, 1977»; en ce qui concerne l'unité de mémoire magnétique UMM on peut consulter par exemple le document «EX 801–820 Printers User Manual», publié par la société AXIOM en avril 1979.

La figure 6 représente un organigramme d'un système enregistreur de perturbations selon l'invention.

Le diagramme vertical de gauche est relatif aux tests et aux opérations de la partie veille EPV. Le stade 100 correspond à l'initiation de la partie EPV, c'est-à-dire sa mise sous tension. Le stade de test 101 représente l'attente qui vient de la commande d'échantillonnage S3 élaborée par l'unité centrale ou un microprocesseur 6; vient ensuite l'opération de scrutation cyclique 102, c'est-à-dire l'échantillonnage des signaux par le multiplexeur en 2 sur commande périodique par le signal S3. L'opération suivante 103 est le rangement du résultat numérique S1 de la structuration dans la mémoire de prédéclenchement 4; ces informations numériques sont inscrites à la place des plus anciennes dans la mémoire 4; les données anciennes sont soit éliminées, soit transmises à la mémoire tampon 5, comme on le verra ultérieurement lors de l'analyse du diagramme EPT. Le stade 104 correspond à des calculs d'asservissement effectués par l'unité centrale pour asservir la fréquence d'échantillonnage aux fluctuations de la fréquence du signal à contrôler, en sorte de sélectionner sensiblement les mêmes échantillons du signal considéré au cours des périodes successives de celui-ci; cette opération permet de préparer les signaux échantillonnés à un traitement ultérieur par compression, réservé aux signaux résultant de perturbations et, de ce fait, ce traitement n'est effectué que dans la partie travail EPT. L'opération 104 résulte de la programmation de l'unité centrale 6; le résultat des calculs d'asservissement influe sur la fréquence d'échantillonnage donnée par le signal de commande S3.

Le diagramme central est relatif aux tests et opérations de la partie travail EPT. L'initialisation en 110 est commandée par le signal S7 qui déclenche l'alimentation 11. Le stade 111 représente le test de cause de mise sous tension. Celle-ci peut résulter d'une détection de perturbation (vers 112) ou d'une commande d'autotest (vers 121) ou encore d'une demande de dialogue opérateur (vers 125). Dans le cas de détection de perturbations, le signal correspondant est le signal S6 reçu par l'unité centrale 6. Le stade 112 est le test commandé par l'unité 6 de l'état de la mémoire 4 si celle-ci est pleine ou non. Dans la négative, le remplissage continue. Dans l'affirmative, on effectue l'opération 113 de lecture des données les plus anciennes stockées en 4. Le stade 114 est l'opération de rangement de ces données (après traitement par compression éventuelle) dans la mémoire de masse 5. Le test 115 correspond à la fin de l'enregistrement, dans la mémoire 5, c'ést-à-dire la fin de la perturbation à enregistrer; ici, il peut y avoir divers types de fonctionnement et, pour chacun, une durée déterminée d'enregistrement selon des règles préprogrammées. Le test 116 correspond à une sortie programmée vers un périphérique et le stade 117, dans l'affirmative, à l'opération de transfert vers une unité mémoire magnétique (UMM) ou une imprimante (IP) extérieure. Le stade 118 est la fin de l'enregistrement.

Le diagramme de droite représente, en 120, le test cause de l'initialisation de l'EPT en l'absence de perturbation. Le stade 121 représente l'opération d'autotest déclenchée par le circuit 30 de la partie exploitation. Cette opération peut également être automatique et périodique, programmée par l'unité centrale 6 et déclenchée par un signal issu de l'horodateur 7. Le test 122 de défaut signifie que l'unité centrale 6 dépouille les résultats de test et détermine s'il y a un défaut ou non. Dans l'affirmative, l'unité déclenche l'opération alarme 123 par le circuit 9 vers l'extérieur. Le stade 124 est la fin de cette séquence.

Le dernier stade 125 représente une activation de l'EPT à partir du terminal de programmation TP, c'est-à-dire l'opération dialogue opérateur.

Un système enregistreur de perturbations conforme à la présente invention, procure à l'utilisateur un moyen économique, par sa conception très optimisée, et évolutif, par sa structure modulaire compatible avec tous les moyens informatiques conventionnels d'enregistrement de signaux électriques à récurrence aléatoire, telles que des perturbations intervenant dans le transport de l'énergie électrique. La possibilité de transmettre les informations à distance, de même que l'exploitation directe des supports magnétiques enregistrés par les moyens informatiques classiques, découlent naturellement de la conception numérique. L'utilisation n'est pas limitée à la surveillance des réseaux électriques. Le système est applicable dans les laboratoires d'étude, l'industrie sidérurgique (alimentation des fours par exemple), le domaine médical (surveillance des malades), les alimentations d'ordinateurs, l'industrie chimique, la production ou la transformation de l'énergie.

## Revendications

1. Système enregistreur de perturbations comportant une partie fixe dite enregistreur (EP) de perturbations installée sur le lieu d'enregistrement et aménagée pour la réception de signaux électriques à surveiller et l'enregistrement des perturbations, une partie (EX) exploitation distincte comportant des moyens d'exploitation des informations enregistrées, et des moyens (8) de liaison électrique entre la partie fixe et la partie exploitation, l'enregistreur de perturbations comportant en série:

- des moyens (1) de réception et d'adaptation desdits signaux électriques;
- des moyens (2) de conversion analogique/ numérique et de multiplexage;
- une première mémoire (4) dite de pré-déclenchement pour produire un retard;
- une deuxième mémoire (5) pour stocker en mode enregistrement, c'est-à-dire après détection de chaque perturbation et pour un laps de temps déterminé, les données des perturbations;
- des moyens (3) de détection des perturbations alimentés par les signaux électriques après adaptation;
- un dispositif horodateur (7);
- des circuits (6) de gestion et de commande dotés d'une unité centrale pour contrôler les circuits de conversion et de multiplexage et la deuxième mémoire ainsi que les moyens de détection de perturbations;
- des circuits (9) générateurs de signaux de service;
- des circuits (10, 11) d'alimentation;

ledit système étant caractérisé en ce que ladite seconde mémoire (5) est une mémoire statique en circuit solide, constituant une mémoire tampon pour le transfert desdits données des perturbations à la partie (EX) exploitation, en ce que lesdits circuits (10, 11) d'alimentation sont constitués par un premier circuit (11) et un deuxième circuit (10) d'alimentation, en ce que le premier (11) circuit d'alimentation alimente durant les périodes de temps correspondant au mode enregistrement la partie (EPT) travail de l'enregistreur de perturbations constituée par la deuxième mémoire (5) et les circuits (9) générateurs de signaux de service, en ce que le deuxième (10) circuit d'alimentation alimente de façon continue la partie (EPV) veille de l'enregistreur de perturbations constituée par au moins une partie de l'unité centrale, les moyens (1) de réception et d'adaptation, les moyens (2) de conversion analogique/numérique et de multiplexage, la première mémoire (4), les moyens (3) de détection des perturbations et le dispositif horodateur (7), et en ce que les moyens de liaison électrique entre la partie fixe et la partie exploitation sont constitués par des interfaces (8) en circuits numériques utilisant une procédure standardisée en informatique.

2. Système selon la revendication 1, caractérisé en ce qu'il comporte en outre des moyens de dialogue de programmation avec l'enregistreur (EP) de perturbations, ces moyens étant constitués sous forme amovible par un terminal (TD) de programmation doté de moyens de programmation et d'affichage, et de moyens de branchement auxdits interfaces numériques (8) de l'enregistreur de perturbations.

3. Système selon la revendication 2, caractérisé en ce que la partie (EPT) travail de l'enregistreur (EP) de perturbations comporte en outre une mémoire (13) morte destinée à fonctionner en liaison à travers l'unité centrale (6) avec le terminal (TP) de programmation.

4. Système selon la revendication 3, caractérisé en ce que l'unité centrale comporte une première unité centrale incluse dans la partie travail (EPT) de l'enregistreur (EP) de perturbations pour contrôler la deuxième mémoire (5) et une seconde unité centrale située dans la partie (EPV) veille constamment sous tension, pour contrôler les circuits (2) de conversion et de multiplexage et les moyens (3) de détection des perturbations.

5. Système selon la revendication 4, caractérisé en ce que les moyens d'éxploitation (EX) sont constitués par une imprimante (IP) sur papier fonctionnant à partir de données numériques et permettant des inscriptions en mode graphique et en mode alpha-numérique.

6. Système selon la revendication 5, caractérisé en ce qu'il comporte plusieurs enregistreurs de perturbations (EP1, EP2, . . .) reliés à travers un boîtier de liaison et de multiplexage (BL) à ladite imprimante (IP) et synchronisés entre eux ou à partir d'une horloge externe (HX) commune.

7. Système selon l'une quelconque des revendications 1 à 4, caractérisé en ce que les moyens d'exploitation (EX) comportent une unité de mémoire magnétique (UMM) pour un stockage de grande capacité des données préalablement stockées dans la mémoire tampon (5) de l'enregistreur.

8. Système selon la revendication 7, caractérisé en ce que les moyens d'exploitation comportent en outre une imprimante (IP) sur papier fonctionnant à partir de données numériques et permettant des inscriptions en mode graphique et en mode alpha-numérique.

9. Système selon la revendication 8, caractérisé en ce qu'il comporte plusieurs enregistreurs (EP1, EP2, . . .) de perturbations reliés à travers un boîtier (BL) de liaison et de multiplexage à ladite unité mémoire magnétique (UMM) et à ladite imprimante (IP).

10. Système selon l'une quelconque des revendications précédentes, caractérisé en ce qu'il comporte une alimentation de secours de l'horodateur (7), cette alimentation étant constituée par un accumulateur (10a) chargé par le deuxième (10) circuit d'alimentation.

**Patentansprüche**

1. Registriersystem für Störungen, mit einem festen sogenannten Störungsregistrierteil (EP), der am Registrierort installiert ist und zum Empfang der zu überwachenden elektrischen Signale und zur Registrierung der Störungen eingerichtet ist, mit einem getrennten Auswertungsteil (EX), der Mittel zur Auswertung der registrierten Informationen aufweist, und mit Mitteln (8) zur elektrischen Verbindung zwischen dem festen Teil und dem Auswertungsteil, wobei der Störungsregistrierteil in Reihe aufweist:

- Mittel (1) zum Empfang und zur Anpassung der elektrischen Signale,
- Mittel (2) zur Analog-Digital-Wandlung und zur Multiplexierung,
- einen ersten Speicher (4), Vorauslösespeicher genannt, zur Erzeugung einer Verzögerung,
- einen zweiten Speicher (5) zur Speicherung der Störungsdaten im Registriermodus, d.h. nach der Entdeckung jeder Störung und für eine vorgegebene Zeitspanne,
- Mittel (3) zur Entdeckung der Störungen, wobei diese Mittel die elektrischen Signale nach der Anpassung zugeführt erhalten,
- eine Zeitgebervorrichtung (7),
- Verwaltungs- und Steuerschaltkreise (6) mit einer Zentraleinheit zur Kontrolle der Wandler- und Multiplexierkreise und des zweiten Speichers sowie der Mittel zur Entdeckung von Störungen,
- Schaltkreise (9) zur Erzeugung von Dienstsignalen,
- Stromversorgungsschaltkreise (10, 11),

dadurch gekennzeichnet, dass der zweite Speicher (5) ein statischer Festkörperschaltkreisspeicher ist und einen Pufferspeicher für die Übertragung der Störungsdaten zum Auswertungsteil (EX) bildet, dass die Stromversorgungsschaltkreise (10, 11) von einem ersten Schaltkreis (11) und einem zweiten Schaltkreis (10) gebildet werden, dass der erste Schaltkreis (11) während der dem Registriermodus entsprechenden Zeitperioden den Arbeitsteil (EPT) des Störungsregistrierers speist, der vom zweiten Speicher (5) und den Schaltkreisen (9) zur Erzeugung der Dienstsignale gebildet wird, dass der zweite Stromversorgungsschaltkreis (10) in kontinuierlicher Form den Überwachungsteil (EPV) des Störungsregistrierers, der von mindestens einem Teil der Zentraleinheit gebildet wird, die Empfangs- und Anpassungsmittel (1), die Analog-Digital-Wandler- und Multiplexiermittel (2), den ersten Speicher (4), die Mittel (3) zur Entdeckung der Störungen und die Zeitgebervorrichtung (7) speist und dass die Mittel zur elektrischen Verbindung zwischen dem festen Teil und dem Auswertungsteil aus Interface-Kreisen (8) bestehen, die von digitalen Schaltkreisen unter Verwendung von in der Informatik genormten Verfahren gebildet werden.

2. System nach Anspruch 1, dadurch gekennzeichnet, dass es ausserdem Programmierdialogmittel zum Dialog mit dem Störungsregistrierer (EP) aufweist, die von einem entfernbaren Programmierendgerät (TD) mit Programmier- und Anzeigemitteln und von Mitteln zum Anschluss an die digitalen Interfaceschaltkreise (8) des Störungsregistrierers gebildet werden.

3. System nach Anspruch 2, dadurch gekennzeichnet, dass der Arbeitsteil (EPT) des Störungsregistrierers (EP) ausserdem einen Festspeicher (13) aufweist, der dazu bestimmt ist, in Verbindung mit dem Programmierendgerät (TP) über die Zentraleinheit (6) betrieben zu werden.

4. System nach Anspruch 3, dadurch gekennzeichnet, dass die Zentraleinheit eine erste im Arbeitsteil (EPT) des Störungsregistrierers (EP) enthaltene Zentraleinheit zur Steuerung des zweiten Speichers (5) und eine zweite im Überwachungsteil (EPV) liegende und ständig unter Spannung stehende Zentraleinheit zur Steuerung der Wandler- und Multiplexierschaltkreise (2) und der Störungs-Entdeckungsmittel (3) aufweist.

5. System nach Anspruch 4, dadurch gekennzeichnet, dass die Auswertungsmittel (EX) von einem Drucker (IP) auf Papier gebildet werden, der aufgrund von digitalen Daten betrieben wird und Aufzeichnungen im Grafikmodus und im alphanumerischen Modus erlaubt.

6. System nach Anspruch 5, dadurch gekennzeichnet, dass es mehrere Störungsregistrierer (EP1, EP2, ...) aufweist, die über einen Verbindungs- und Multiplexierkasten (BL) an den Drucker (IP) angeschlossen und untereinander oder ausgehend von einem gemeinsamen äusseren Taktgeber (HX) synchronisiert sind.

7. System nach einem beliebigen der Ansprüche 1 bis 4, dadurch gekennzeichnet, dass die Auswertungsmittel (EX) eine Magnetspeichereinheit (UMM) zur Speicherung einer grossen Menge von vorher im Pufferspeicher (5) des Registrierers gespeicherten Daten aufweisen.

8. System nach Anspruch 7, dadurch gekennzeichnet, dass die Auswertungsmittel ausserdem einen Drucker (IP) auf Papier enthalten, der ausgehend von digitalen Daten betrieben wird und Aufzeichnungen im Grafikmodus und im alphanumerischen Modus erlaubt.

9. System nach Anspruch 8, dadurch gekennzeichnet, dass es mehrere Störungsregistrierer (EP1, EP2, ...) aufweist, die über einen Verbindungs- und Multiplexierkasten (BL) an die Magnetspeichereinheit (UMM) und den Drucker (IP) angeschlossen sind.

10. System nach einem beliebigen der vorhergehenden Ansprüche, dadurch gekennzeichnet, dass es eine Notstromversorgung für den Zeitgeber (7) enthält, die von einem aus dem zweiten Stromversorgungskreis (10) aufgeladenen Akkumulator (10a) gebildet wird.

**Claims**

1. A disturbance signal recording system comprising a fixed part called disturbance recorder (EP) installed at the recording point and serving to receive electric signals to be monitored and to record disturbances, a separate processor part (EX) including means for processing the recorded informations, and electrical connection means (8) between the fixed part and the processor part, the disturbance recorder incorporating in series:

- means (1) for the reception and the matching of the electric signals,
- analog/digital conversion and multiplexer means (2),

- a first memory (4) called pre-triggering memory for producing a delay,
- a second memory (5) for storing the disturbance data in the recording mode, i.e. after the detection of each disturbance and for a predetermined time duration,
- means (3) for detecting the disturbances, these means being supplied with the electric signals after matching,
- a time dating device (7),
- management and control circuits (6) including a central unit for controlling the conversion and multiplexer circuits and the second memory as well as the disturbance detection means,
  - circuits (9) for generating service signals,
  - power supply circuits (10, 11),

characterized in that said second memory (5) is a static solid circuit memory and constitutes a buffer memory for the transfer of said disturbance data to the processing part (EX), that said power supply circuits (10, 11) are constituted by a first supply circuit (11) and a second supply circuit (10), that the first supply circuit (11) supplies power to the working part (EPT) of the disturbance recorder during the time periods corresponding to the recording mode, that working part being constituted by the second memory (5) and the circuits (9) for generating service signals, that the second power supply circuit (10) feeds continuously power to the watching part (EPV) of the disturbance recorder, this part being constituted by at least a portion of the central unit, to the reception and matching means (1), to the analog/digital conversion and multiplexer means (2), to the first memory (4), to the disturbance detection means (3) and the time dating device (7), and that the means for the electric connection between the fixed part and the processor part are constituted by digital circuit interfaces (8) using a procedure which is standardized in informatics.

2. A system according to claim 1, characterized in that it further comprises programming dialogue means for the dialogue with the disturbance recorder (EP), these means being detachable and being constituted by a programming terminal (TD) having program and display means as well as means for connection to said digital interfaces (8) of the disturbance recorder.

3. A system according to claim 2, characterized in that the working part (EPT) of the disturbance recorder (EP) further includes a read-only memory (13) for operating via the central unit (6) in conjunction with the programming terminal (TP).

4. A system according to claim 3, characterized in that the central unit comprises a first central unit included in the working part (EPT) of the disturbance recorder (EP) for controlling the second memory (5), and a second central unit located in the watching part (EPV) and continuously powersupplied for controlling the conversion and multiplexer circuits (2) and the disturbance detection means (3).

5. A system according to claim 4, characterized in that the processor means (EX) are constituted by a paper printer (IP) operating on the basis of digital data and permitting entries in the graphic mode and in the alphanumeric mode.

6. A system according to claim 5, characterized in that it comprises several disturbance recorders (EP1, EP2, ...) which are connected via a connection and multiplexer box (BL) to said printer (IP) and are synchronized with one another or from a common external clock (HX).

7. A system according to any one of claims 1 to 4, characterized in that the processing means (EX) comprise a magnetic memory unit (UMM) for storing a large capacity of data which have previously been stored in the buffer memory (5) of the recorder.

8. A system according to claim 7, characterized in that the processor means further comprise a paper printer (IP) operating on the basis of digital data and permitting entries in the graphic mode and in the alphanumeric mode.

9. A system according to claim 8, characterized in that it comprises several disturbance recorders (EP1, EP2, ...) connected via a connection and multiplexer box (BL) to said magnetic memory unit (UMM) and to said printer (IP).

10. A system according to any one of the preceding claims, characterized in that it comprises an emergency power supply for the time dating device (7), this supply being constituted by an accumulator (10a) which is charged by the second power supply circuit (10).

# FIG_1

0 072 270

# FIG_2

# FIG_3

# FIG_4

# FIG_5

FIG_6